# EUROPÄISCHE PATENTSCHRIFT

(11) **EP 0 693 450 B1**
(45) Veröffentlichungstag und Bekanntmachung des Hinweises auf die Patenterteilung: **23.09.1998**
(21) Anmeldenummer: 95108826.9
(22) Anmeldetag: 08.06.1995
(51) Int. Cl.: B65H 37/00

(54) **Vorrichtung zum Überschieben klebriger Cordbandstreifen für Reifenherstellung**
Device for transferring adhesive "Cord band" strips for the production of tires
Dispositif pour transférer des rubans adhésifs du type "Cordband" pour produire des pneus

(30) Priorität: 19.07.1994 DE 4425405
(43) Veröffentlichungstag der Anmeldung: 24.01.1996
(73) Patentinhaber: Karl Eugen Fischer GmbH Maschinenfabrik, D-96224 Burgkunstadt (DE)
(72) Erfinder: Hoffmann, Bernd, D-96224 Burgkunstadt (DE)
(74) Vertreter: Matschkur, Lindner Blaumeier Patent- und Rechtsanwälte

(56) Entgegenhaltungen:
- EP-A- 0 487 107
- DE-A- 1 956 444
- PATENT ABSTRACTS OF JAPAN vol. 011 no. 054 (M-563) ,19.Februar 1987 & JP-A-61 217470 (FUJITSU LTD) 27.September 1986,

## Beschreibung

Die Erfindung bezieht sich auf eine Vorrichtung zum Überschieben von klebrigen Cordbandstreifen, von einem Förderband auf eine stehende Unterlage, über der ein Luftkissen erzeugt wird.

Bei der Förderung von Cordbandstreifen im Zuge der Reifenherstellung ist es oft notwendig, den von einem Band abgeschnittenen, in einer nachfolgenden Stufe weiterzuverarbeitenden, beispielsweise an einen anderen Streifen anzuspleißenden, relativ klebrigen Streifen vom Förderband auf eine stehende Unterlage zu überschieben, die ggf. auch ein weiteres, bei der Übergabe stehendes Förderband sein kann. Die Klebrigkeit der Cordbandstreifen verhindert ein einfaches Auflaufen und führt, wenn keine zusätzlichen Vorkehrungen getroffen sind, dazu, daß der Streifen nicht glatt aufläuft, sondern am vorderen Ende stehenbleibt und sich überschlägt, so daß er zum einen falsch herum auf der Unterlage liegt oder aber als ein zusammengeschobenes Teil, und nicht als planer Streifen.

Um diesem Mißstand abzuhelfen, hat man bereits versucht, über dem Tisch ein Luftkissen zu erzeugen, indem man unter dem Tisch einen Kasten angeordnet hat, in den Luft eingeblasen werden kann, die durch eine Vielzahl von Öffnungen in der Unterlage austritt und so ein Luftkissen über dem Tisch erzeugt.

Diese Anordnung ist ersichtlich nicht nur außerordentlich kompliziert, da sie sehr starke Gebläse erfordert, um über der gesamten Unterlage ein Luftkissen erzeugen zu können, sie hat darüber hinaus auch den Nachteil, daß sie beispielsweise in Fällen, in denen die stehende Unterlage ein bei der Übergabe stehendes Förderband ist, überhaupt nicht anwendbar ist, da ja dann das Förderband in entsprechender Weise perforiert sein müßte und das Ausblasen über ein perforiertes Förderband in der Praxis mit ganz ernormen Schwierigkeiten verbunden ist, wenn es überhaupt funktionieren soll.

Der Erfindung liegt daher die Aufgabe zugrunde, eine Vorrichtung der eingangs genannten Art dahingehend auszugestalten, daß bei einfachem Aufbau ein zuverlässiges glattes Einlaufen auch sehr klebriger Streifen vom Förderband auf die stehende Unterlage möglich ist.

Zur Lösung dieser Aufgabe ist erfindungsgemäß vorgesehen, daß im Spalt zwischen dem Förderband und der stehenden Unterlage eine Luftausblasleiste mit im wesentlichen horizontaler, zur Unterlage paralleler, Ausblasrichtung angeordnet ist.

Bei umfangreichen, der vorliegenden Erfindung zugrundeliegenden Versuchen hat es sich gezeigt, daß ein derartiger horizontaler Luftstrom zwischen der stehenden Unterlage und dem darauf zu überschiebenden klebrigen Streifen, insbesondere Cordbandstreifen, ein problemloses Aufschieben eines solchen Streifens bis nahezu 1,50 m vom Ende des Förderbandes entfernt ermöglicht, wobei der Streifen im wesentlichen flatterfrei auf dem Luftkissen bewegt wird, das neben seiner Funktion, den Streifen bei der Aufschiebbewegung zunächst außer Kontakt mit der stehenden Unterlage zu halten, auch zusätzlich den Vorschub mit verstärkt.

Mit besonderem Vorteil kann die Luftausblasleiste durch eine verschmälerte Ausbuchtung eines unter der stehenden Unterlage angeordneten Luftzuführungskanals gebildet sein, so daß die stehende Unterlage extrem nah am Ende des Förderbandes, also an dessen Umlenkrolle, liegen kann, da die Leiste selbst ersichtlich sehr schmal ausgebildet sein kann.

Die vorzugsweise als horizontale Schlitze, noch dazu mit endseitigen Abschrägungen, ausgebildeten Luftaustrittsdüsen sind in weiterer Ausgestaltung der Erfindung im gewölbten Kopfbereich der Luftausblasleiste, d.h. im Übergangsbereich zwischen der Vorderwand und dem gekrümmten Kopfbogen, angeordnet, so daß die Hauptwirkung des Luftstroms unmittelbar unter den nahezu tangential über der Luftausblasleiste ankommenden Streifen wirkt.

Der sich notwendigerweise ergebende Keilspalt zwischen der Luftaustrittsleiste, die etwa in Höhe des Förderbandes oberhalb der Ebene der stehenden Unterlage endet, und der Förderband-Umlenkwalze ist zweckmäßigerweise durch einen etwa tangential an beide anschließenden Übergabestreifen, im allgemeinen ein Stahlblechstreifen, überdeckt, so daß ein völlig glattes Übergleiten des zu überschiebenden Streifens vom Förderband über den Kopf der Luftausblasleiste zum anschließend wirkenden horizontalen Luftstrom stattfindet.

Schließlich liegt es auch noch im Rahmen der Erfindung, eine, ggf. im Übergabestreifen eingebaute, zum Einschalten des Gebläses dienende Lichtschranke zum Erfassen eines Streifens vorzusehen. Bevorzugt soll nämlich der Luftstrom nicht ständig anliegen, sondern nur dann eingeschaltet werden, wenn gerade ein Streifen zu übergeben ist, wobei die Erfassung des Streifens natürlich auch durch eine Reflexionseinrichtung erfolgen kann, bei der von oben Licht auf das Förderband gestrahlt wird, das bei Abwesenheit eines Streifens zurückreflektiert wird und damit anzeigt, daß kein Streifen da ist, während die Anwesenheit eines schwarzen absorbierenden Cordstreifens über den Ausfall des reflektierten Lichts zu einem Ansprechen und damit zum Einschalten des Gebläses zum Erzeugen des horizontalen Luftstroms dient.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine schematische Seitenansicht einer erfindungsgemäßen Vorrichtung zum Überschieben klebriger Cordbandstreifen von einem Förderband auf eine stehende Unterlage,
- Fig. 2: einen vergrößerten Schnitt parallel zur Förderrichtung durch die Anordnung nach Fig. 1,
- Fig. 3: einen nochmals vergrößerten Schnitt durch den Kopfbereich der Luftausblasleiste, und
- Fig. 4: einen Schnitt längs der Linie IV-IV in Fig. 3 zur Verdeutlichung der Ausbildung der Ausblasdüsen.

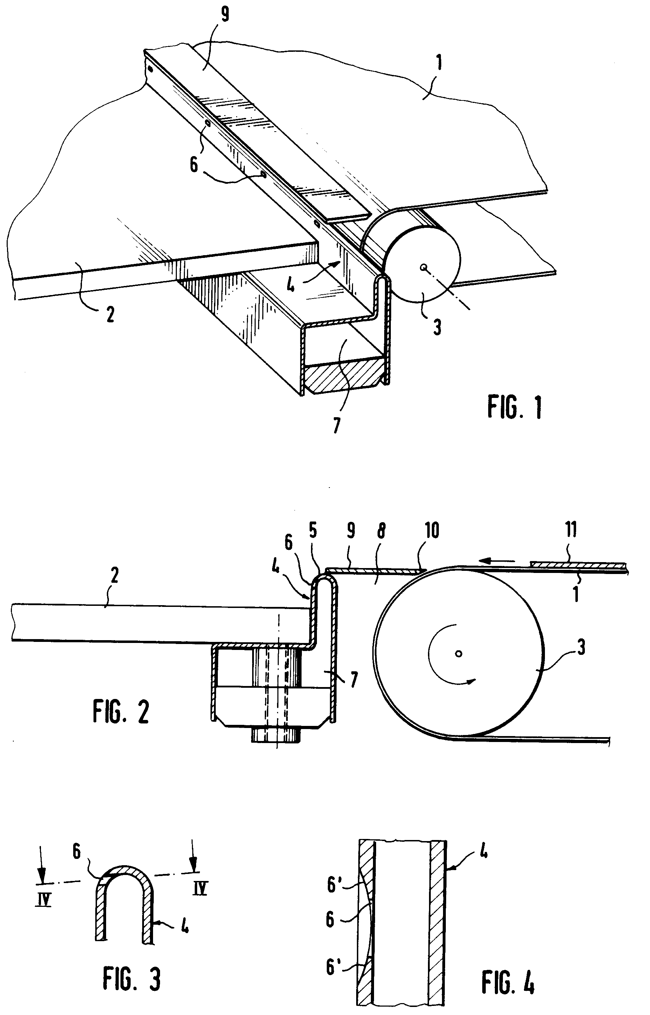

In den Figuren ist bei 1 ein Förderband dargestellt, welches Cordbandstreifen 11 von einer Schneidvorrichtung auf eine stehende Unterlage 2 fördern soll, wobei mit 3 die der stehenden Unterlage 2 benachbarte Umlenkwalze bezeichnet ist, die auch gleichzeitig die Antriebswalze für das Förderband 1 sein kann. Zwischen dem Förderband 1 und der stehenden Unterlage 2 ist eine Luftausblasleiste 4 angeordnet, deren gewölbter Kopf 5 etwa in Höhe des Förderbandes 1 liegt, während die stehende Unterlage, wie in solchen Fällen stets, etwas tiefer angeordnet ist. Die Luftausblasleiste 4 ist oben im Übergangsbereich zum gekrümmten Kopf 5 mit Luftaustrittsdüsen 6 versehen, die als horizontale Schlitze ausgebildet sind, deren Längsenden 6' (wie man insbesondere in Fig. 4 erkennen kann) keilförmig abgeschrägt nach außen laufen. Die Luftausblasleiste 4 bildet eine verschmälerte Ausbuchtung eines unter der stehenden Unterlage 2 angeordneten Luftführungskanals 7, der an ein nicht gezeigtes Gebläse angeschlossen ist. Die durch die Luftaustrittsdüsen 6 ausströmende Luft weist eine im wesentlichen horizontale, d.h. zur stehenden Unterlage 2 parallele Ausblasrichtung auf, und ergibt dabei für einen vom Förderband auf die stehende Unterlage 2 zu überschiebenden Cordbandstreifen 11 ein tragendes und gleichzeitig in Richtung der Aufschiebbewegung förderndes Luftkissen. Es hat sich dabei gezeigt, daß ein so ausgebildetes Luftkissen die Übergabe gegenüber einem wesentlich aufwendigeren Luftkissen, bei dem die Luft durch Bohrungen der stehenden Unterlage unter Einblasen der Luft von unten erzeugt wird, sogar noch verbessert.

Der Keilspalt zwischen der Luftausblasleiste 4 und der vorderen Förderbandumlenkwalze 3 ist durch einen Übergabestreifen 9, beispielsweise einen Stahlblechstreifen, überdeckt, der im wesentlichen tangential sowohl an den Kopf 5 der Luftausblasleiste 4, als auch tangential an die Umlenkwalze 3 anschließt. Wie man in Fig. 2 deutlich erkennen kann, ist dabei die dicht an der Oberfläche des Förderbandes 1 anliegende innere Kante 10 des Übergabestreifens 9 abgeschrägt, um möglichst keine Kante zu bilden, an der das Überlaufen des Cordbandstreifens 11 gestört werden könnte.

## Patentansprüche

1. Vorrichtung zum Überschieben von klebrigen Cordbandstreifen im Zuge der Reifenherstellung, von einem Förderband auf eine stehende Unterlage, über der ein Luftkissen erzeugt wird, dadurch gekennzeichnet, daß im Spalt (8) zwischen dem Förderband (1) und der stehenden Unterlage (2) eine Luftausblasleiste (4) mit im wesentlichen horizontaler, zur stehenden Unterlage (2) paralleler, Ausblasrichtung angeordnet ist.

2. Vorrichtung nach Anspruch 1, dadurch gekennzeichnet, daß die Luftausblasleiste (4) durch eine verschmälerte Ausbuchtung eines unter der stehenden Unterlage (2) angeordneten Luftführungskanals (7) gebildet ist.

3. Vorrichtung nach Anspruch 2, dadurch gekennzeichnet, daß die vorzugsweise als horizontale Schlitze ausgebildeten Luftaustrittsdüsen (6) im gewölbten Kopfbereich (5) der Luftausblasleiste (4) angeordnet sind.

4. Vorrichtung nach einen der Ansprüche 1 bis 3, dadurch gekennzeichnet, daß der Keilspalt (8) zwischen der Luftausblasleiste (4) und der Förderband-Unlenkwalze (3) durch einen etwa tangential an beide anschließenden Übergabestreifen (9) überdeckt ist.

5. Vorrichtung nach einem der Ansprüche 1 bis 4, gekennzeichnet durch eine, vorzugsweise im Übergabestreifen (9) eingebaute, zum Einschalten des Gebläses dienende Lichtschranke zum Erfassen eines Streifens.

## Claims

1. Device for transferring adhesive corded tape strips in the course of tyre manufacture from a conveyor belt to a stationary substrate, over which an air cushion is generated, characterised in that in the gap (8) between the conveyor belt (1) and the stationary substrate (2) an air blower strip (4) is disposed, having a blowing direction which is substantially horizontal and parallel to the stationary substrate (2).

2. Device according to claim 1, characterised in that the air blower strip (4) is formed by a narrowed cut-out of an air guidance channel (7) disposed below the stationary substrate (2).

3. Device according to claim 2, characterised in that the air output nozzles (6) formed preferably as horizontal slots are formed in the convex top region (5) of the air blower strip (4).

4. Device according to one of claims 1 to 3, characterised in that the wedge-shaped gap (8) between the air blower strip (4) and the conveyor belt deflection roller (3) is covered by a transfer strip (9) adjoining both in a roughly tangential manner.

5. Device according to one of claims 1 to 4, characterised by a light barrier for switching on the blower fitted preferably in the transfer strip (9), for detecting a strip.

## Revendications

1. Dispositif pour transférer des rubans adhésifs du type "cordband" pour la production de pneus, à partir d'une bande transporteuse sur un support immobile sur lequel est généré un coussin d'air, caractérisé en ce que dans la fente (8) entre la bande transporteuse (1) et le support (2) immobile est disposée une barre pour le soufflage d'air (4) présentant un sens de soufflage essentiellement horizontal, parallèle au support (2) vertical.

2. Dispositif selon la revendication 1, caractérisé en ce que la barre pour le soufflage d'air (4) est formée par une avance étroite d'une gaine de ventilation (7) disposée sous le support (2) vertical.

3. Dispositif selon la revendication 2, caractérisé en ce que des buses de sortie d'air (6) réalisées de préférence comme fentes horizontales sont disposées dans la zone bombée de la tête (5) de la barre pour le soufflage d'air (4).

4. Dispositif selon l'une quelconque des revendications 1 à 3, caractérisé en ce que la fente en coin (8) entre la barre pour le soufflage d'air (4) et le rouleau de renvoi (3) de la bande transporteuse est recouverte par une bande de transfert (9) adjacente de manière à peu près tangentielle à ces deniers.

5. Dispositif selon l'une quelconque des revendications 1 à 4, caractérisé par une barrière photoélectrique insérée de préférence dans la bande de transfert (9), servant à mettre en service la souffleuse et à détecter une bande.
